# EUROPÄISCHE PATENTSCHRIFT

(11) **EP 4 434 820 B1**
(45) Veröffentlichungstag und Bekanntmachung des Hinweises auf die Patenterteilung: **03.09.2025**
(21) Anmeldenummer: 23163537.6
(22) Anmeldetag: 22.03.2023
(51) Int. Cl.: B60R 19/18

(54) **STOSSFÄNGER FÜR EIN KRAFTFAHRZEUG**
BUMPER FOR A MOTOR VEHICLE
PARE-CHOCS POUR UN VÉHICULE AUTOMOBILE

(43) Veröffentlichungstag der Anmeldung: 25.09.2024
(73) Patentinhaber: Benteler Automobiltechnik GmbH, 33102 Paderborn (DE)
(72) Erfinder: SPENNER, Sebastian, 33154 Salzkotten-Verne (DE); RÖPER, Burkhard, 33104 Paderborn (DE); KUWABARA, Augusto, 33100 Paderborn (DE)
(74) Vertreter: Ksoll, Peter

(56) Entgegenhaltungen:
- US-A1- 2005 213 478
- US-A1- 2010 194 125
- US-A1- 2018 281 710

## Beschreibung

Die Erfindung betrifft einen Stoßfänger für ein Kraftfahrzeug gemäß den Merkmalen im Oberbegriff von Anspruch 1.

Stoßfänger werden bei Kraftfahrzeugen standardmäßig sowohl front- als auch heckseitig eingebaut, um Stoßenergie von Anprallvorgängen abzufangen, so dass die Tragstruktur des Kraftfahrzeugs möglichst nicht beschädigt wird. Zudem sollen Stoßfänger dazu beitragen, Verletzungen bei Fußgängern oder Radfahrern zu minimieren. Ein Stoßfänger weist einen Querträger auf, der üblicherweise unter Eingliederung von Crashboxen quer zu den Längsträgern des Kraftfahrzeugrahmens festlegbar ist. Der Querträger dient dazu, die aus einem Anprall resultierende Energie in die Crashboxen einzuleiten, wo die Stoßenergie in Verformungsarbeit umgewandelt wird.

Durch die US 10,000,170 B2 zählt ein Stoßfänger für ein Kraftfahrzeug zum Stand der Technik. Dieser besitzt einen über Crashboxen quer zu den Längsträgern des Kraftfahrzeuges festlegbaren Querträger. Der Querträger umfasst einen Schalenkörper mit einem hutförmigen Profil und ein frontseitig des Schalenkörpers angeordnetes Schließblech. Der Schalenkörper weist eine Rückwand sowie zwei Außenschenkel auf, an welche sich endseitig jeweils ein nach außen gerichteter Frontsteg anschließt.

Aus der US 2005/0213478 A1 geht ein Stoßfängersystem für ein Kraftfahrzeug hervor mit einem U-förmig konfigurierten Schalenkörper und einem U-förmig konfiguriertem Schließkörper. Bei einem Anprall rollen Wandabschnitte der Bauteile relativ zueinander, um Stoßenergie abzubauen. Der Stoßfänger der US 2005/0213478 A1 offenbart die Merkmale des Oberbegriffs des Anspruchs 1.

Die US 2010/0194125 A1 offenbart einen Stoßfänger mit einem quer zu den Längsträgern des Kraftfahrzeugrahmens festlegbaren Querträger und Crashboxen, die zwischen dem Querträger und den Längsträgern eingegliedert sind. Die Crashboxen sind mit dem Querträger gefügt. Dies erfolgt mittels Setzbolzen ohne Vorlochen.

Stoßfänger müssen die gesetzlichen Regelungen ebenso wie die von Verbraucherschutzorganisationen gestellten Anforderungen an einen Fußgängerschutz erfüllen. Neben einer guten Crashperformance stellt sich herstellerseitig die Anforderung, den zur Verfügung stehenden Bauraum bestmöglich auszunutzen und gewichtsmäßig vorteilhafte Stoßfänger bereitzustellen. Diese Zielvorgaben müssen gleichzeitig im Einklang mit den hohen Sicherheitsanforderungen eines Kraftfahrzeugs stehen.

Der Erfindung liegt ausgehend vom Stand der Technik die Aufgabe zugrunde, einen funktional und bauraumtechnisch verbesserten Stoßfänger für ein Kraftfahrzeug zu schaffen.

Die Lösung dieser Aufgabe besteht in einem Stoßfänger gemäß Anspruch 1. Vorteilhafte Ausgestaltungen und Weiterbildungen des erfindungsgemäßen Stoßfängers sind Gegenstand der abhängigen Ansprüche.

Ausgestaltungen und Modifikationen von Merkmalen des Kraftfahrzeug-Stoßfängers, die einzeln oder in Kombination den Stoßfänger funktional und technologisch vorteilhaft ausgestalten, ergeben sich auch aus der Beschreibung und den beigefügten Zeichnungen.

Begriffe wie "quer" und "längs", "oben" und "unten", "horizontal" und "vertikal" oder "Längsrichtung" und "Querrichtung", "Oberseite" und "Unterseite" beziehen sich jeweils auf die Einbaulage des Stoßfängers in einem Kraftfahrzeug. Richtungsangaben beziehen sich auf ein Fahrzeugkoordinatensystem. Ein Fahrzeugkoordinatensystem ist ein dreidimensionales kartesisches Koordinatensystem, um die Achsen innerhalb eines Kraftfahrzeugs und von Bauteilen des Kraftfahrzeugs zu kennzeichnen. Die x- und y-Achse liegen in einer Horizontalebene (= Fahrzeugebene). Die x-Achse entspricht der Fahrzeuglängsachse, die y-Achse entspricht der Fahrzeugquerachse und die z-Achse entspricht der Fahrzeughochachse.

Der Stoßfänger für ein Kraftfahrzeug besitzt einen quer zu den Längsträgern des Kraftfahrzeugs festlegbaren Querträger. Der Querträger weist einen Schalenkörper und ein frontseitiges des Schalenkörpers angeordnetes Schließblech auf. Der Schalenkörper ist zumindest auf dem überwiegenden Teil seiner Länge durch das Schließblech geschlossen. Der Schalenkörper und das Schließblech schließen einen Hohlraum ein. Der Schalenkörper weist in seinem Längsverlauf einen Mittellängenabschnitt auf, an welchen sich in Richtung zu beiden Enden des Querträgers jeweils ein Endabschnitt anschließt. Im Querschnitt ist der Schalenkörper U-förmig konfiguriert und besitzt eine Rückwand sowie einen oberen Schenkel und einen unteren Schenkel. Im Mittellängenabschnitt des Querträgers weist der Schalenkörper einen sich an den oberen Schenkel anschließenden nach außen gerichteten oberen Frontsteg und einen sich an den unteren Schenkel anschließenden nach außen gerichteten unteren Frontsteg auf. Der obere Schenkel und der untere Schenkel des Schalenkörpers erstrecken sich in der Fahrzeughochachse (z-Achse). Im Mittellängenabschnitt liegt das Schließblech an den Frontstegen an und ist mit diesen gefügt. In zumindest einem Endabschnitt weist das Schließblech einen in Richtung zur Rückwand des Schalenkörpers weisenden Zargenabschnitt auf, welcher im Endabschnitt an einem oberen Schenkel oder einem unteren Schenkel des Schalenkörpers anliegt und mit diesem gefügt ist. Der Zargenabschnitt erstreckt sich in Fahrzeuglängsachse (x-Achse).

In einem oder beiden Endabschnitten weist der Schalenkörper am oberen Schenkel und/oder am unteren Schenkel keinen frontseitigen Steg auf. Dort stößt das Schließbleich mit einer oberen Flanke und/oder einer unteren Flanke flach an die stirnseitige Kante des oberen und/oder des unteren Schenkels. Der zumindest eine Zargenabschnitt des Schließblechs kontaktiert einen der beiden Schenkel.

Es kann vorgesehen sein, dass das Schließblech flach bzw. stumpf an die stirnseitige Kante des oberen und/oder des unteren Schenkels stößt. Bevorzugt sind das Schließblech und der obere und/oder der untere Schenkel im Endbereich jedoch überlappend angeordnet und miteinander gefügt.

Besonders vorteilhaft liegt der Zargenabschnitt außenseitig am oberen Schenkel oder am unteren Schenkel an und ist mit diesem gefügt.

Das Schließblech weist in einem oder in beiden Endabschnitten ein U-förmigen Querschnitt oder L-förmigen Querschnitt auf.

Der zumindest eine Zargenabschnitt überlappt den oberen Schenkel oder den unteren Schenkel und ist mit diesem gefügt. Durch die Überlappung von Schenkel und Zargenabschnitt ist der Endabschnitt in diesem Bereich doppellagig ausgeführt.

Bei einer vorteilhaften Ausführungsform ist vorgesehen, dass ein Zargenabschnitt außenseitig und ein Zargenabschnitt innenseitig an einem der Schenkel des Schalenkörpers, also am oberen Schenkel oder am unteren Schenkel des Schalenkörpers anliegt und jeweils mit dem Schenkel gefügt ist.

Der erfindungsgemäße Stoßfänger weist ein hohes Energieaufnahmevermögen auf bei verbessertem Deformationsverhalten. Die geometrische Ausgestaltung des Schalenkörpers in Kombination mit dem Schließblech führen zu einem funktional und bauraumtechnisch verbesserten Stoßfänger mit hohem Energieaufnahmevermögen und belastungsoptimiertem Verformungsverhalten.

Die Geometrie des Stoßfängers ist bauraumoptimiert. Insbesondere sind die Endabschnitte so konzipiert, dass sie in enge Volumen passen und dabei eine bauteil- und belastungsgerechte Anbindung für Koppelglieder zum Kraftfahrzeugrahmen gewährleisten, insbesondere für die Befestigung von Crashboxen und/oder weiteren Deformationsprofilen.

Durch die zumindest einseitige Umklammerung des Schalenkörpers im Endabschnitt durch den Zargenabschnitt des Schließblechs kann die Bauhöhe des Querträgers im Endabschnitt reduziert werden unter Gewährleistung einer funktionsgerecht hohen Biegesteifigkeit und eines hohen Widerstandsmoments im Endabschnitt. Bei einer Kollision, bei welcher der Stoßfänger einseitig mit geringer Überdeckung getroffen wird, steigt das Spannungsniveau im Endabschnitt stark an, wobei der Querschnitt länger erhalten bleibt bevor der Endabschnitt beginnt sich plastisch zu verformen. Die aus dem Anprall resultierende Energie wird so über den Querträger mit einem reduzierten Biegemoment in die im Endabschnitt angebundene Crashbox eingeleitet.

Der Querträger des Stoßfängers ist von oben gesehen gekrümmt, wobei die Endabschnitte zu einem Kraftfahrzeug hin gekrümmt verlaufen.

Der Schalenkörper weist im Mittellängenabschnitt eine Breite und eine Höhe auf und weiterhin weist der Schalenkörper in einem Endabschnitt eine Höhe und eine Breite auf. Die Höhe ist in Fahrzeughochachse (z-Achse) gemessen von der Außenseite des oberen Schenkels zur Außenseite des unteren Schenkels. Die Breite ist in Fahrzeuglängsachse (x-Achse) gemessen von der Frontseite des Schalenkörpers bis zur Außenseite der Rückwand. Die erfindungsgemäße Ausgestaltung sieht vor, dass die Höhe im Mittellängenabschnitt kleiner bemessen ist als die Höhe in einem Endabschnitt, wohingegen die Breite im Mittellängenabschnitt größer bemessen ist als die Breite in dem Endabschnitt.

Der Schalenkörper weist im Mittellängenabschnitt eine Breite und eine Höhe auf, wobei im Mittellängenabschnitt die Breite gleich oder größer ist als die Höhe und der Schalenkörper in einem Endabschnitt eine Höhe und eine Breite aufweist, wobei in dem Endabschnitt die Höhe größer bemessen ist als die Breite.

Vorzugsweise weist der Schalenkörper im Mittellängenabschnitt eine Breite und eine Höhe auf, wobei das Verhältnis der Höhe zur Breite bei etwa 1 : 1 ± 20 % bemessen ist.

In einem Endabschnitt weist der Schalenkörper eine Höhe und eine Breite auf, wobei das Verhältnis der Höhe zur Breite zwischen 1,5 : 1 und 3,5 : 1 bemessen ist.

Erfindungsgemäß ist weiter vorgesehen, dass zwischen dem Mittellängenabschnitt und den Endabschnitten jeweils ein Übergangsabschnitt vorgesehen ist, welcher sich ausgehend vom Mittellängenabschnitt in der Höhe vergrößert und in der Breite verringert.

Eine das Steifigkeitsverhalten und den Biegewiderstand verbessernde Maßnahme besteht darin, dass das Schließblech eine oder mehrere Sicken aufweist. Sicken können in Fahrzeughochachse (z-Achse) oder in Fahrzeugquerachse (y-Achse) angeordnet sein. Beispielsweise können Sicken vertikal orientiert in den Frontstegen des Schalenkörpers und/oder insbesondere in den parallel zu den Frontstegen angeordneten Längenabschnitten des Schließblechs vorgesehen sein.

Eine das Belastungs- und Verformungsverhalten insgesamt verbessernde Ausgestaltung sieht vor, dass der Mittellängenabschnitt des Schließblechs zumindest eine sich in Längsrichtung erstreckende Längssicke aufweist.

Die in Längsrichtung des Schließblechs verlaufende Sicke ist rinnenartig gestaltet und insbesondere nach innen zum Schalenkörper gerichtet.

Es können mehrere Sicken im Schließblech vorgesehen sein, insbesondere können mehrere längsgerichtete Sicken im Bereich des Mittellängsabschnitts im Schließblech vorgesehen sein. Diese sind mit vertikalem Abstand übereinander angeordnet. Vorzugsweise erstreckt sich eine zentrale längsgerichtete Sicke im Schließblech im Wesentlichen in der horizontalen Mittellängsebene des Querträgers. Die zentrale Längssicke erstreckt sich über den Mittellängenabschnitt und vorzugsweise bis in die Übergangsabschnitte des Querträgers. Optional kann sich die Längssicke auch bis in die Endabschnitte erstrecken.

Sind zwei oder mehrere längsgerichtete Sicken im Schließblech vorgesehen, können diese voneinander verschiedene Längen besitzen.

Das Schließblech ist durch die eine oder mehrere längsgerichtete Sicken in vertikalen Querschnitt wellenförmig konfiguriert.

Auch im Schalenkörper können Sicken vorgesehen sein. Sicken können in der Rückwand im oberen und/oder unteren Schenkel sowie in den Frontstegen des Schalenkörpers vorgesehen sein.

Insbesondere ist der Querträger über Crashboxen quer zu den Längsträgern eines Kraftfahrzeugs festlegbar. Hierzu ist vorgesehen, dass der Schalenkörper in den Endabschnitten des Querträgers jeweils einen Anbindungsbereich für eine Crashbox aufweist.

Weiterhin vorteilhaft schließen sich an den oberen Frontsteg und/oder an den unteren Frontsteg des Schalenkörpers ein zur Rückwand hin abgewinkelter Außensteg an. In diesem Zusammenhang kann sich der Außensteg (14, 15) maximal über 50 % der Länge des Mittellängenabschnitts (9) und/oder der Länge des oberen Frontstegs (12) und/oder des unteren Frontstegs (13) erstrecken.

Bei einer vorteilhaften Ausführungsform des erfindungsgemäßen Stoßfängers ist vorgesehen, dass das Schließblech zumindest einen Mittelzargenabschnitt aufweist. Der Mittelzargenabschnitt befindet sich im Mittellängenabschnitt des Querträgers bzw. dem mittleren Längenabschnitt des Schließblechs.

Ein Mittelzargenabschnitt kann den oberen Schenkel und/oder den unteren Schenkel des Schalenkörpers nach Art einer Bördelung umgreifen.

Bei einer besonders vorteilhaften Ausgestaltung liegt der Mittelzargenabschnitt an einem Außensteg an. Vorzugsweise weist das Schließblech einen oberen Mittelzargenabschnitt und einen unteren Mittelzargenabschnitt auf. Die Mittelzargenabschnitte sind in Fahrzeuglängsachse (x-Achse) in Richtung zur Rückwand des Schalenkörpers gerichtet und übergreifen außenseitig den oberen Außensteg und den unteren Außensteg.

Weiterhin besteht eine vorteilhafte Ausgestaltung darin, dass das Schließblech im Bereich der Endabschnitte des Querträgers Ausnehmungen und/oder Aussparungen aufweist. Insbesondere sind Aussparungen jeweils in den Enden des Schließblechs vorgesehen. Vorzugsweise ist jeweils eine Aussparung in einem Ende des Schließblechs vorgesehen, welche stirnseitig des Endes offen ist.

Eine weitere Ausgestaltung des Stoßfängers besteht darin, dass das Schließblech Endbereiche aufweist, welche gegenüber einem Ende des Schalenkörpers überstehen.

Bei einer vorteilhaften Ausgestaltung können Deformationsprofile vorgesehen sein, welche an die Endabschnitte angeschlossen sind. Insbesondere sind Deformationsprofile in Fahrzeuglängsachse (x-Achse) zum Kraftfahrzeug hin gerichtet. Die Deformationsprofile können sich an die Enden der Endabschnitte des Stoßfängers angliedern oder mittelbarer oder unmittelbarer Bestandteil des Schalenkörpers und/oder des Schließblechs sein.

Weiterhin vorteilhaft können der Schalenkörper und das Schließblech aus voneinander verschiedenen Stahlwerkstoffen bestehen. Auch können der Schalenkörper und das Schließblech eine metallische oder eine elektrochemische Beschichtung aufweisen.

Das Schließblech und der Schalenkörper sind schweißtechnisch gefügt. Eine Fügung erfolgt im Mittellängenabschnitt zwischen den Frontstegen des Schalenkörpers und dem Schließblech. Weiterhin erfolgt eine Fügung in den Endabschnitten zwischen dem Zargenabschnitt des Schließblechs und dem Schalenkörper, und zwar je nach Ausführungsform zwischen dem Zargenabschnitt und dem oberen Schenkel und/oder dem unteren Schenkel des Schalenkörpers. Die Fügungen können im Mittellängenabschnitt und in dem oder den Endabschnitten durch unterschiedliche Schweißverfahren ausgeführt sein. Hierbei können Lichtbogenschweißen und Widerstandsschweißen kombiniert werden. Unterschiedliche Schweißverfahren können auch darin bestehen, dass die Fügung im Mittellängenabschnitt durch Punktschweißen erfolgt, wohingegen die Fügung in dem oder den Endabschnitten durch Nahtschweißen erfolgt.

Weiterhin vorteilhaft für den Kraftfahrzeug-Stoßfänger insgesamt und insbesondere im Hinblick auf die Crashperformance kann der Schalenkörper aus einem ultrahochfesten Stahlwerkstoff (UHSS) bestehen oder ein pressgehärtetes Stahlbauteil aus einen Bohrstahl sein. Das Schließblech besteht vorzugsweise aus einem Schnellarbeitsstahl (HSS).

Erfindungsgemäß ist vorgesehen, dass der Schalenkörper eine Zugfestigkeit von größer 1.250 MPa und das Schließblech eine Zugfestigkeit zwischen 800 - 1.200 MPa aufweist. Bei einem warmgeformten und pressgehärteten Schalenkörper liegt die Zugfestigkeit bei größer 1.450 MPa oder sogar oberhalb von 1.750 MPa.

Im Rahmen der Erfindung ist insbesondere vorgesehen, dass das Schließblech einteilig ausgeführt ist. Möglich ist es auch, dass das Schließblech mehrteilig ist. Auch kann das Schließblech ein Tailored Blank sein. In diesem Zusammenhang sind Tailor Welded Blanks (TWB) oder auch Patchwork Blanks vorteilhaft und funktionsabgestimmt möglich.

Durch die geometrische Ausgestaltung von Schalenkörper und Schließblech sowie deren Abstimmung aufeinander ist das Biegewiderstandsmoment des Stoßfängers über dessen Längsverlauf und insbesondere in den Endabschnitten belastungsgerecht eingestellt. Gleiches gilt für das Torsionswiderstandsmoment. Besonders vorteilhaft ist die Konfiguration des Querträgers in den Endabschnitten bzw. die Möglichkeit das Belastungsverhalten des Querträgers durch Modifikation der Endabschnitte einzustellen. Die Bauhöhe des Querträgers kann in den Endabschnitten verringert werden bei belastungsgerecht eingestellter Höhe. Durch die Verzargung zwischen dem Zargenabschnitt des Schließblechs und einem Schenkel des Schalenkörpers ist eine ausreichend hohe Verstärkung und Biegesteifigkeit in den Endabschnitten gewährleistet. Es ist auch möglich, die Höhe des Querträgers in einem oder beiden Endabschnitten gegenüber der Höhe im Mittellängenabschnitt beizubehalten. Auch kann die Tiefe bzw. Breite des Querträgers in einem Endabschnitt verringert werden. Weiterhin kann die vom Schalenkörper und dessen Rückwand sowie dem oberen und dem unteren Schenkel und dem Schließblech eingeschlossene Querschnittsfläche im Längsverlauf des Querträgers variiert werden, insbesondere zwischen dem Mittellängenabschnitt und den Endabschnitten. Dies ermöglicht zudem die Ausbildung einer zumindest bereichsweise vergrößerten Höhe der Rückwand des Querträgers bzw. des Schalenkörpers, wodurch die Anbindungsfläche für eine Crashbox vergrößert werden kann.

Durch die Verzargung des Schließblechs und des Schalenkörpers im Endabschnitt über den Zargenabschnitt des Schließblechs und den oberen und/oder unteren Schenkel des Schalenkörpers kann die Höhe des Querträgers im Endabschnitt reduziert werden unter mindestens Beibehaltung des Widerstandsmoments. Dies ist bauraumtechnisch vorteilhaft. Funktional vorteilhaft ist, dass durch diese Ausgestaltung die plastische Verformung im Endabschnitt und des im Endabschnitt vorgesehenen Anbindungsbereichs für eine Crashbox verzögert werden kann. Dementsprechend kann der Endabschnitt und der Übergangsabschnitt bei einer Kollision größere Belastungen aufnehmen, bevor sie beginnen sich plastisch zu verformen.

Die Erfindung ist nachfolgend anhand von in den Zeichnungen dargestellten Ausführungsbeispielen näher beschrieben. Es zeigen:
- Figur 1: einen erfindungsgemäßen Stoßfänger in einer perspektivischen Ansicht;
- Figur 2: den Stoßfänger gemäß der Darstellung der Figur 1 in einer Frontansicht;
- Figur 3: den Stoßfänger in einer Draufsicht;
- Figur 4: eine weitere Ausführungsform eines Stoßfängers in einer Draufsicht;
- Figur 5: eine Frontansicht auf eine weitere Ausführungsform eines Stoßfängers;
- Figur 6: einen vertikalen Querschnitt durch einen Mittellängenabschnitt eines Stoßfängers;
- Figur 7: einen vertikalen Querschnitt durch einen Endabschnitt eines Stoßfängers;
- Figur 8: technisch schematisiert die Anbindung einer Crashbox an einen Stoßfänger;
- Figur 9: einen vertikalen Querschnitt durch einen Endabschnitt einer weiteren Ausführungsform eines Stoßfängers;
- Figur 10: einen vertikalen Querschnitt durch den Mittellängenabschnitt einer weiteren Ausführungsform eines Stoßfängers;
- Figur 11: einen vertikalen Querschnitt durch den Endabschnitt einer weiteren Ausführungsform eines Stoßfängers;
- Figur 12: eine weitere Ausführungsform eines erfindungsgemäßen Stoßfängers in einer perspektivischen Ansicht;
- Figur 13: den Stoßfänger gemäß der Darstellung der Figur 12 in einer Draufsicht;
- Figur 14: den Stoßfänger in einer Frontansicht und
- Figur 15: einen Endabschnitt des Stoßfängers in einer Seitenansicht.

In den Figuren werden für gleiche oder ähnliche Bauteile die gleichen Bezugszeichen verwendet, auch wenn aus Gründen der Vereinfachung auf eine wiederholte Beschreibung verzichtet wird.

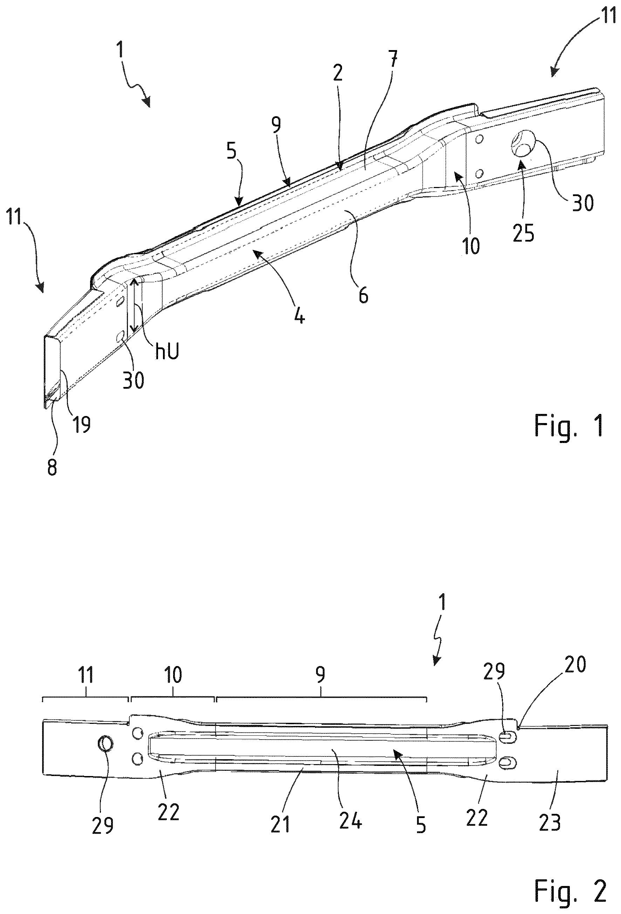

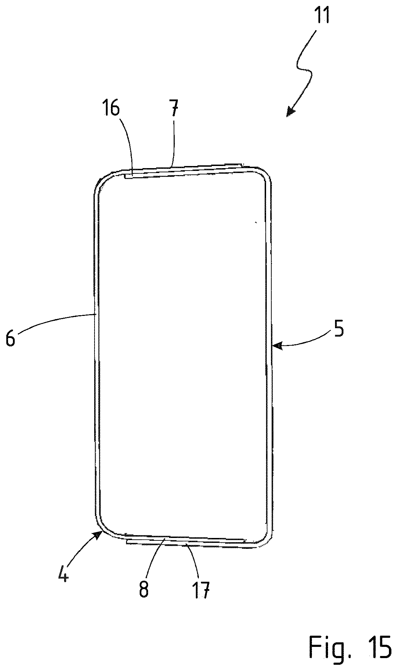

Anhand der Figuren 1 bis 15 sind erfindungsgemäße Stoßfänger 1 und Modifikationen eines Querträgers 2 des Stoßfängers 1 beschrieben.

Ein Stoßfänger 1 kommt im Front- oder Heckbereich der Karosserie eines Kraftfahrzeugs zum Einsatz.

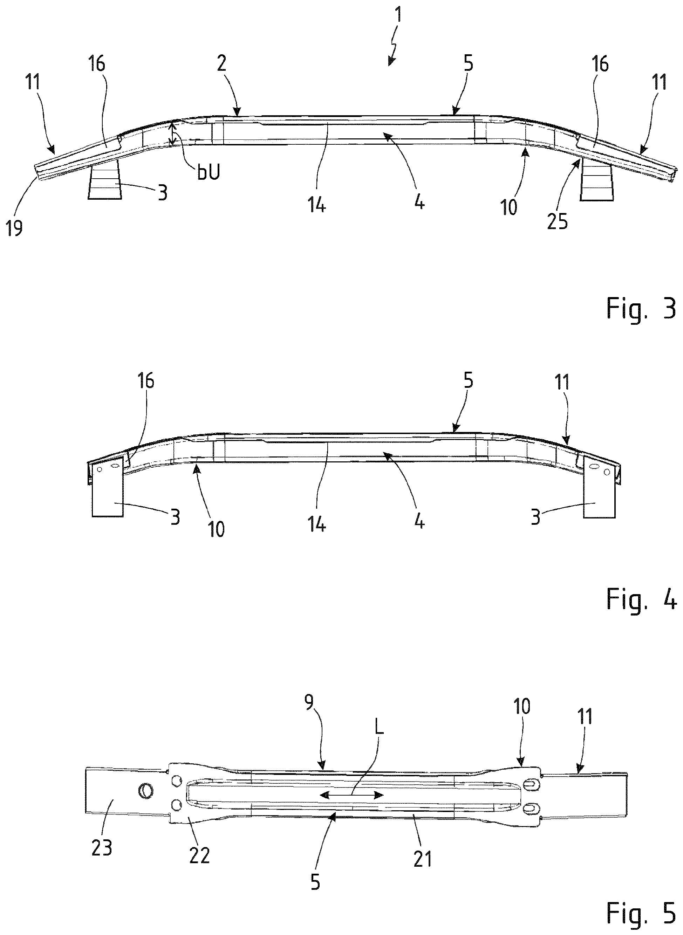

Der Stoßfänger 1 weist einen Querträger 2 auf, der quer zu den hier nicht dargestellten Längsträgers eines Kraftfahrzeugs festlegbar ist. Der Querträger 2 stützt sich über in den Figuren 3 und 4 sowie der Figur 8 dargestellte Crashboxen 3 an den Längsträgern ab. Die Crashboxen 3 sollen zusätzlich zum Querträger 2 die aus einem Anprall insbesondere bei niedriger Geschwindigkeit resultierende Energie absorbieren, in dem diese in Verformungsarbeit umgewandelt wird.

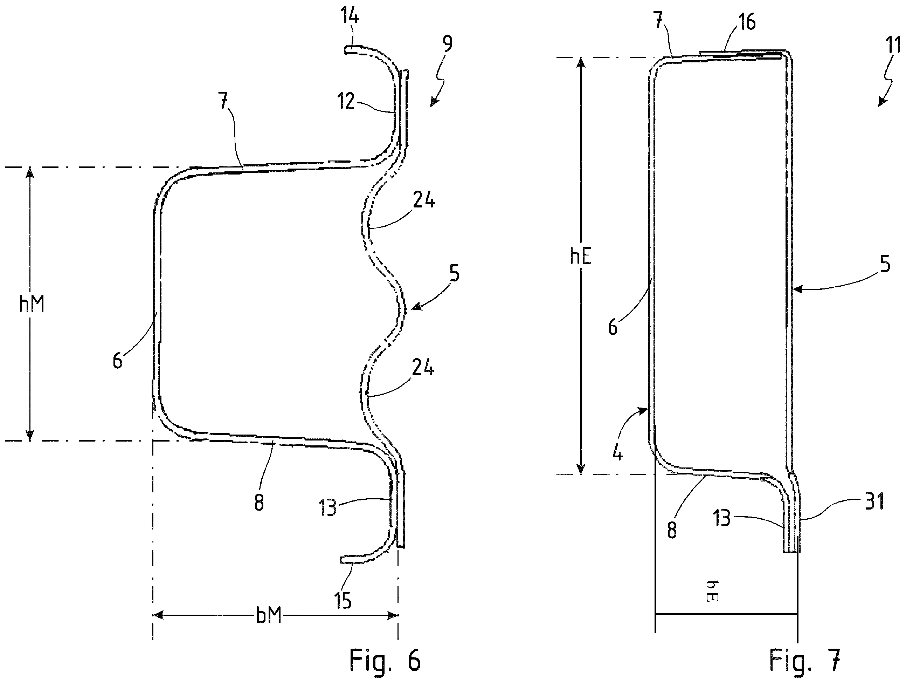

Der Querträger 2 weist einen an der Frontseite offenen Schalenkörper 4 auf, der durch ein sich über die Länge des Schalenkörpers 4 erstreckendes Schließblech 5 geschlossen ist. Der Schalenkörper 4 ist im Querschnitt U-förmig konfiguriert und besitzt eine Rückwand 6 sowie einen oberen Schenkel 7 und einen unteren Schenkel 8 (siehe hierzu auch die Figuren 6 und 7 sowie 10 und 11).

Der Querträger 2 erstreckt sich in Fahrzeugquerachse (y-Achse) und weist einen Mittellängenabschnitt 9 auf, an den sich beidseitig Übergangsabschnitte 10 und Endabschnitte 11 anschließen.

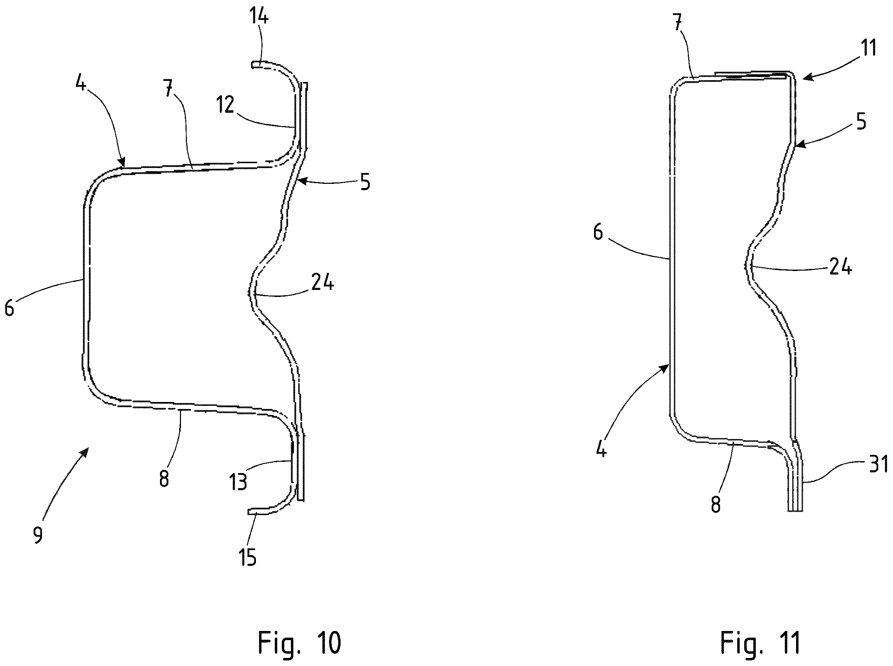

Im Mittellängenabschnitt 9 des Querträgers 2 weist der Schalenkörper 4 einen sich an den oberen Schenkel 7 anschließenden nach außen gerichteten oberen Frontsteg 12 und einen sich an den unteren Schenkel 8 anschließenden nach außen gerichteten unteren Frontsteg 13 auf. Der obere Frontsteg 12 und der untere Frontsteg 13 sind in Fahrzeughochachse (z-Achse) gerichtet. An den oberen Frontsteg 12 und an den unteren Frontsteg 13 des Schalenkörpers 4 schließt sich jeweils ein in Richtung zur Rückwand 6 hin abgewinkelter oberer Außensteg 14 bzw. unterer Außensteg 15 an (siehe Figur 6 und Figur 10). Dies zeigen insbesondere die Darstellungen der Figuren 6 und 10. Wie insbesondere anhand der Figuren 3 und 4 zu erkennen, erstrecken sich die Außenstege 14, 15 mittig über eine Teillänge des Mittellängenabschnitts 9.

Das Schließblech 5 liegt im Mittellängenabschnitt 9 am oberen Frontsteg 12 und unteren Frontsteg 13 an und ist mit diesen gefügt.

In den Endabschnitten 11 weist das Schließblech 5 jeweils einen in Richtung zur Rückwand 6 des Schalenkörpers 4 weisenden Zargenabschnitt 16, 17 auf. Der Zargenabschnitt 16, 17 ist in Fahrzeuglängsachse (x-Achse) orientiert.

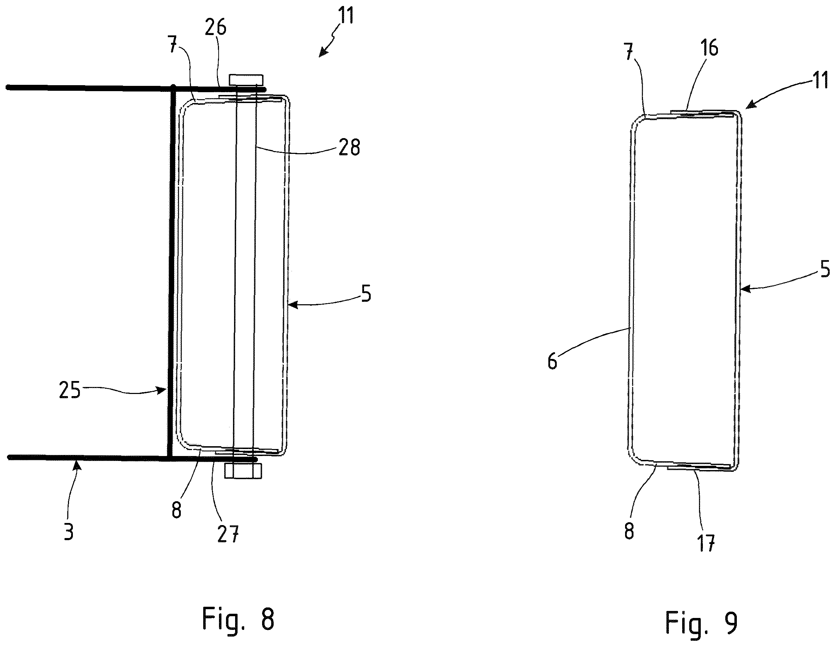

Das Schließblech 5 besitzt in einem Endabschnitt 11 einen U-förmigen Querschnitt, wenn es einen oberen Zargenabschnitt 16 und einen unteren Zargenabschnitt 17 aufweist. Eine U-förmige Querschnittskonfiguration des Schließblechs 5 im Endabschnitt 11 zeigen die Figuren 8 und 9.

Das Schließblech 5 besitzt einen L-förmigen Querschnitt, wenn es nur einen oberen Zargenabschnitt 16, wie in den Figuren 1, 7 und 11 dargestellt, oder einen unteren Zargenabschnitt 17 besitzt.

Bei dem anhand der Figuren 1 bis 3 sowie den Figuren 7 und 11 erläuterten Stoßfänger 1 liegt der obere Zargenabschnitt 16 im Endabschnitt 11 am oberen Schenkel 7 des Schalenkörpers 4 an und ist mit diesem gefügt. Hierbei kontaktiert der Zargenabschnitt 16 die Außenseite 18 des oberen Schenkels 7.

Der untere Frontsteg 13 des Schalenkörpers 4 erstreckt sich über die Länge des Schalenkörpers 4 und verläuft entlang der Übergangsabschnitte 10 bis zu den Enden 19 der Endabschnitte 11. Das Schließblech 5 liegt stirnseitig mit einem Flankenabschnitt 31 am unteren Frontsteg 13 an und ist mit diesem stoffschlüssig gefügt, insbesondere punktgeschweißt.

Bei der in den Figuren 4 und 5 sowie 8 und 9 dargestellten Ausführungsform eines Stoßfängers 1 ist das Schließblech 5 in den Endabschnitten 11 U-förmig konfiguriert und weist einen oberen Zargenabschnitt 16 und einen unteren Zargenabschnitt 17 auf, die jeweils in x-Achse gerichtet umgestellt sind. Der oberen Zargenabschnitt 16 liegt im Endabschnitt 11 am oberen Schenkel 7 des Schalenkörpers 4 an. Der untere Zargenabschnitt 17 liegt außenseitig am unteren Schenkel 8 des Schalenkörpers 4 an. Entlang der Zargenabschnitte 16, 17 sind das Schließblech 5 und der Schalenkörper 4 über Schweißnähte miteinander gefügt.

Zwischen dem Mittellängenabschnitt 9 und einem Endabschnitt 11 des Querträgers 2 ist jeweils ein Übergangsabschnitt 10 vorgesehen. Der Übergangsabschnitt 10 vergrößert sich in der Höhe hU, wohingegen sich die Breite bU des Schalenkörpers 4 im Übergangsabschnitt 10 verringert. Die Querschnittskontur des Schalenkörpers 4 im Übergangsabschnitt 10 verändert sich vom Querschnitt des Schalenkörpers 4 im Mittellängenabschnitt 9 hin zum Querschnitt des Schalenkörpers 4 im Endabschnitt 11.

Der obere Frontsteg 12 und der untere Frontsteg 13 erstrecken sich über die Länge des Mittellängenabschnitts 9. In den Übergangsabschnitten 10 enden die Frontstege 12, 13 und laufen zu dem oberen Schenkel 7 und dem unteren Schenkel 8 hin aus. Der obere Frontsteg 12 und der untere Frontsteg 13 erstrecken sich über die Länge der Übergangsabschnitte 10. Der obere Frontsteg 12 und der untere Frontsteg 13 enden jeweils vor einem Endabschnitt 11. Dort ist im Schließblech 5 jeweils ein Einschnitt 20 vorgesehen, um den oberen Zargenabschnitt 16 und den unteren Zargenabschnitt 17 in Richtung der x-Achse zur Rückwand 6 hin abzukanten.

Der Schalenkörper 4 weist im Mittellängenabschnitt 9 eine Breite bM und eine Höhe hM auf, wobei im Mittellängenabschnitt 9 die Breite bM gleich oder größer ist als die Höhe hM. In einem oder jedem Endabschnitt 11 weist der Schalenkörper 4 eine Höhe hE und eine Breite bE auf. In dem oder jedem Endabschnitt 11 ist die Höhe hE größer bemessen als die Breite bE.

Im Mittellängenabschnitt 9 ist das Verhältnis Breite bM zu Höhe hM größer als das Verhältnis der Breite bE zur Höhe hE in einem oder jedem Endabschnitt 11.

Der Schalenkörper 4 besitzt im Mittellängenabschnitt 9 die U-förmige Konfiguration, wobei die Höhe hM und die Breite bM etwa gleich bemessen sind und ein Verhältnis von 1 : 1 ± 20 % aufweisen. Die Höhe hM ist gemessen jeweils zwischen den Außenseiten des oberen Schenkels 7 und des unteren Schenkels 8. Die Breite bM ist gemessen von der offenen Frontseite des Schalenkörpers 4 bis zur Außenseite der Rückwand 6.

In den Übergangsabschnitten 10 zu den Endabschnitten 11 hin vergrößert sich der Schalenkörper 4 in der Höhe hU bei Abnehmen der Breite bU. In den Endabschnitten 11 weist der Schalenkörper 4 eine Höhe hE und eine Breite bE auf, wobei die Höhe hE im dargestellten Ausführungsbeispiel etwa 2,5mal größer ist als die Breite bM. Im Rahmen der Erfindung ist das Verhältnis der Höhe hE zur Breite bE zwischen 1,5 : 1 und 3,5 : 1 bemessen.

Das Schließblech 5 erstreckt sich in Längsrichtung über die Länge des Schalenkörpers 4 und weist im Mittellängenabschnitt 9 ein rechteckig konfiguriertes Mittelstück 21 auf. Die Konfiguration des Schließblech 5 in den sich über die Übergangsabschnitte 10 erstreckenden Übergangsstücke 22 ist trapezförmig, wohingegen Frontstücke 23 des Schließblechs 5 in den Endabschnitten 11 rechteckförmig konfiguriert ist. Materialeinheitlich einstückig schließen sich an die Frontstücke 23 die umgestellten Zargenabschnitte 16 bzw. 17 an.

Endseitig kann das Schließblech 5 bei einer nicht dargestellten Ausführungsform über die Endabschnitte 11 und den Schalenkörper 4 überstehen.

Im Mittellängenabschnitt 9 des Querträgers 2 weist das Schließblech 5 eine sich in Längsrichtung L erstreckende Längssicke 24 auf. Die Längssicke 24 erstreckt sich über die Länge des Mittellängenabschnitts 9 bzw. das Mittelstück 21 bis in die Übergangsabschnitte 10 und die dortigen Übergangsstücke 22.

Bei der in der Figur 6 dargestellten Querschnittskonfiguration des Mittellängenabschnitts 9 sind im Schließblech 5 zwei nach innen gerichtete Sicken 24 vorgesehen. Auf diese Weise weist das Schließblech 5 eine wellenförmige Kontur auf.

Bei dem in der Figur 10 und 11 dargestellten Ausführungsbeispiel ist eine nach innen gerichtete Sicke 24 vorgesehen, die sich in Längsrichtung L des Schließblechs 5 erstreckt und zwar über den Mittellängenabschnitt (Figur 10) bis in einen Endabschnitt 11 hinein (Figur 11).

Der Schalenkörper 4 weist in den Endabschnitten 11 des Querträgers 2 jeweils einen Anbindungsbereich 25 für eine Crashbox 3 auf. Eine Crashbox 3 kann an die Außenseite der Rückwand 6 des Schalenkörpers 4 anstoßen und dort mit dem Schalenkörper 4 gefügt sein (Figur 3).

Bei der in der Figur 4 dargestellten Ausführungsform übergreift eine Crashbox 3 im Anbindungsbereich 25 den Schalenkörper 4 und den auf dem oberen Schenkel 7 aufliegenden oberen Zargenabschnitt 16 und ist mit diesen gefügt.

Die Figur 8 verdeutlicht, dass der Querträger 2 in einem Endabschnitt 11 und dem dort vorgesehenen Anbindungsbereich 25 von einer oberen Lasche 26 und einer unteren Lasche 27 einer Crashbox 3 über- bzw. umgriffen ist und mittels einem Schraubverbindungsmittel 28, welches die obere Lasche 26 und die untere Lasche 27 durchsetzt und in der Höhe quer durch den Endabschnitt 11 verläuft, verbunden ist.

Das Schließblech 5 weist Ausnehmungen 29 in Form von Öffnungen auf. Hierbei handelt es sich insbesondere um Funktionsöffnungen zur Durchführung einer Abschleppöse, von Schraubverbindungsmitteln oder um die Zugänglichkeit zu Montageelementen zu gewährleisten. Ausnehmungen 29 können auch zur Gewichtsersparnis vorgesehen sein oder zur Erzeugung von Schwächezonen bzw. Soll-Deformationsstellen. Ausnehmungen 29 können auch als Durchzüge mit insbesondere nach innen in Richtung zum Hohlraum des Querträgers 2 eingezogenen Kragen ausgebildet sein. Funktional entsprechende Öffnungen 30 sind auch im Schalenkörper 4 des Querträgers 2 vorgesehen.

Der Schalenkörper 4 und das Schließblech 5 können aus voneinander verschiedenen Stahlwerkstoffen bestehen. Ebenso können der Schalenkörper 4 und/oder das Schließblech 5 eine metallische Beschichtung oder eine elektrochemische Beschichtung aufweisen. Auch können das Schließblech 5 und der Schalenkörper 4 mittels unterschiedlicher Schweißverfahren stoffschlüssig gefügt sein, beispielsweise durch eine Punktschweißung im Mittellängsabschnitt 9 und eine Nahtschweißung in einem Endabschnitt 11.

Weiterhin vorteilhaft ist, wenn der Schalenkörper 4 eine Zugfestigkeit Rm von größer gleich (≥) 1.250 MPa und das Schließblech 5 eine Zugfestigkeit Rm von 800 bis 1.200 MPa aufweist.

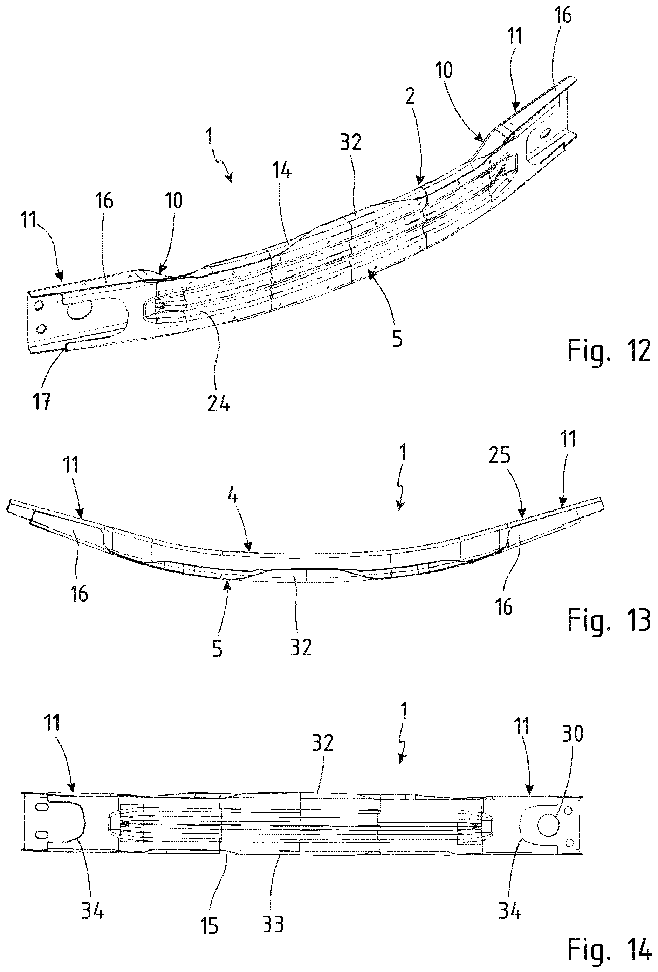

Die Figuren 12 bis 15 zeigen ein weiteres Ausführungsbeispiel eines erfindungsgemäßen Stoßfängers 1.

Der Stoßfänger 1 weist einen Querträger 2 auf, der im Wesentlichen aus einem Schalenkörper 4 und einem frontseitig des Schalenkörpers 4 angeordneten Schließblech 5 gebildet ist. Der Schalenkörper 4 ist im Querschnitt U-förmig konfiguriert. Der Schalenkörper 4 besitzt eine Rückwand 6 sowie einen oberen Schenkel 7 und einen unteren Schenkel 8. Der Querträger 2 weist einen Mittellängenabschnitt 9 auf, an welchen sich jeweils endseitig Endabschnitte 11 anschließen.

Details des Querträgers 2 und des Schalenkörpers 4 sowie des Schließblechs 5 und Modifikationsmöglichkeiten davon ergeben sich auch aus der vorstehenden Erläuterung.

Bei dem Stoßfänger 1 gemäß den Darstellungen der Figuren 12 bis 15 weist der Schalenkörper 4 im Mittellängenabschnitt 9 des Querträgers 2 eine sich an den oberen Schenkel 7 anschließenden nach außen gerichteten oberen Frontsteg 12 und einen sich an den unteren Schenkel 8 anschließenden nach außen gerichteten unteren Frontsteg 13 auf, die sich in Fahrzeughochachse (z-Achse) erstrecken bzw. gerichtet sind. An den oberen Frontsteg 12 schließt sich ein in x-Achse in Richtung zur Rückwand 6 hin weisender oberer Außensteg 14 an. An den unteren Frontsteg 13 des Schalenkörpers 4 schließt sich ein in Richtung zur Rückwand 6 des Schalenkörpers 4 hin gerichteter unterer Außensteg 15 an.

In den Endabschnitten 11 weist das Schließblech 5 jeweils einen in Richtung zur Rückwand 6 des Schalenkörpers 4 weisenden Zargenabschnitt 16, 17 auf. Die Zargenabschnitte 16, 17 sind in Fahrzeuglängsachse (x-Achse) orientiert. Das Schließblech 5 besitzt in den Endabschnitten 11 jeweils einen U-förmigen Querschnitt. Der obere Zargenabschnitt 16 liegt innenseitig am oberen Schenkel 7 des Schalenkörpers 4 an. Der untere Zargenabschnitt 17 liegt außenseitig am unteren Schenkel 8 des Schalenkörpers 4 an. Die Zargenabschnitte 16 bzw. 17 überlappen die jeweiligen Schenkel 7, 8 und sind mit diesen gefügt. Diese Gestaltung der Endabschnitte 11 hinsichtlich der Konfiguration und Anordnung der der Zargenabschnitte 16, 17 und der Schenkel 7, 8 zueinander kann auch auf die Ausführungsformen der Figuren 8 und 9 übertragen werden. Aus dieser Konfiguration ergibt sich umformtechnisch der Vorteil, dass beim Schließblech 5 kein kritischer Hinterschnitt ausgeformt werden muss.

Im Mittellängenabschnitt 9 des Querträgers 2 weist das Schließblech 4 einen oberen Mittelzargenabschnitt 32 und einen unteren Mittelzargenabschnitt 33 auf. Die Mittelzargenabschnitte 32, 33 sind in der Mitte der Querträgers 2 angeordnet und erstrecken sich über eine Teillänge des Querträgers 2. Endseitig verjüngen sich die Mittelzargenabschnitte 32, 33 und laufen in die sich in z-Achse erstreckende Flachseite des Schließblechs 5 aus.

Der obere Mittelzargenabschnitt 32 liegt außenseitig am oberen Außensteg 14 an. Der untere Mittelzargenabschnitt 33 liegt außenseitig am unteren Außensteg 15 des Schalenkörpers 4 an. Der Schalenkörper 4 wird durch die Mittelzargenabschnitte 32, 33 im Mittellängenabschnitt 9 bereichsweise umklammert.

Insbesondere in den Darstellungen der Figuren 12 und 14 erkennt man, dass das Schließblech 5 im Bereich der Endabschnitte 11 endseitig einseitig offene Aussparungen 34 aufweist.

### Bezugszeichen:

- 1 -: Stoßfänger
- 2 -: Querträger
- 3 -: Crashbox
- 4 -: Schalenkörper
- 5 -: Schließblech
- 6 -: Rückwand
- 7 -: oberer Schenkel
- 8 -: unterer Schenkel
- 9 -: Mittellängsabschnitt
- 10 -: Übergangsabschnitt
- 11 -: Endabschnitt
- 12 -: oberer Frontsteg
- 13 -: unterer Frontsteg
- 14 -: Außensteg
- 15 -: Außensteg
- 16 -: oberer Zargenabschnitt
- 17 -: unterer Zargenabschnitt
- 18 -: Außenseite von 7
- 19 -: Ende von 11
- 20 -: Einschnitt
- 21 -: Mittelstück von 5
- 22 -: Übergangsstück von 5
- 23 -: Frontstück
- 24 -: Sicke
- 25 -: Anbindungsbereich
- 26 -: obere Lasche
- 27 -: untere Lasche
- 28 -: Schraubenverbindungsmittel
- 29 -: Ausnehmung in 5
- 30 -: Öffnung in 4
- 31 -: Flankenabschnitt von 5
- 32 -: Mittelzargenabschnitt
- 33 -: Mittelzargenabschnitt
- 34 -: Aussparung

- L -: Längsrichtung
- bU -: Breite von 10
- bM -: Breite von 9
- bE -: Breite von 11
- hU -: Höhe von 10
- hM -: Höhe von 9
- hE -: Höhe von 11

## Patentansprüche

1. Stoßfänger (1) für ein Kraftfahrzeug mit einem Querträger (2), wobei der Querträger (2) einen Schalenkörper (4) und ein frontseitig des Schalenkörpers (4) angeordnetes Schließblech (5) aufweist, wobei der Schalenkörper (4) im Querschnitt U-förmig konfiguriert ist mit einer Rückwand (6) sowie einem oberen Schenkel (7) und einem unteren Schenkel (8) und der Querträger (2) einen Mittellängenabschnitt (9) und Endabschnitte (11) aufweist,
wobei der Schalenkörper (4) im Mittellängenabschnitt (9) einen sich an den oberen Schenkel (7) anschließenden nach außen gerichteten oberen Frontsteg (12) und einen sich an den unteren Schenkel (8) anschließenden nach außen gerichteten unteren Frontsteg (13) aufweist, wobei das Schließblech (5) an den Frontstegen (12, 13) anliegt und mit diesen gefügt ist und das Schließblech (5) in zumindest einem Endabschnitt (11) einen in Richtung zur Rückwand (6) des Schalenkörpers (4) weisenden Zargenabschnitt (16, 17) aufweist, welcher im Endabschnitt (11) an einem oberen Schenkel (7) oder an einem unteren Schenkel (8) des Schalenkörpers (4) anliegt und mit diesem gefügt ist, wobei
der Schalenkörper (4) im Mittellängenabschnitt (9) eine Breite (bM) und eine Höhe (hM) aufweist und der Schalenkörper (4) in einem Endabschnitt (11) eine Höhe (hE) und eine Breite (hE) aufweist, wobei die Höhe in Fahrzeughochachse (z-Achse) gemessen ist zwischen der Außenseite des oberen Schenkels (7) und der Außenseite des unteren Schenkels (8) und die Breite in Fahrzeuglängsachse (x-Achse) gemessen ist von der Frontseite des Schalenkörpers (4) bis zur Außenseite der Rückwand (6) des Schalenkörpers (4), **dadurch gekennzeichnet dass**
die Höhe (hM) im Mittellängenabschnitt (9) kleiner bemessen ist als die Höhe (hE) im Endabschnitt (11) und die Breite (bM) im Mittellängenabschnitt (9) größer bemessen ist als die Breite (bE) im Endabschnitt (11) und wobei im Mittellängenabschnitt (9) das Verhältnis von Breite (bM) zu Höhe (hM) größer ist als das Verhältnis von Breite (bE) zu Höhe (hE) in einem Endabschnitt (11) und zwischen dem Mittellängenabschnitt (9) und einem Endabschnitt (11) ein Übergangsabschnitt (10) vorgesehen ist, welcher sich ausgehend vom Mittellängenabschnitt (9) in der Höhe (hU) vergrößert und in der Breite (bU) verringert.

2. Stoßfänger nach Anspruch 1, **dadurch gekennzeichnet, dass** der Zargenabschnitt (16, 17) außenseitig am oberen Schenkel (7) oder am unteren Schenkel (8) anliegt und der Zargenabschnitt (16, 17) mit dem oberen Schenkel (7) oder dem unteren Schenkel (8) überlappt gefügt ist.

3. Stoßfänger nach Anspruch 1 oder 2, **dadurch gekennzeichnet, dass** ein Zargenabschnitt (16, 17) außenseitig und ein Zargenabschnitt (16, 17) innenseitig am oberen Schenkel (7) oder am unteren Schenkel (8) des Schalenkörpers (4) anliegt.

4. Stoßfänger nach einem der Ansprüche 1 oder 3, **dadurch gekennzeichnet, dass** das Schließblech (4) im Endabschnitt (11) einen U-förmigen Querschnitt oder einen L-förmig Querschnitt besitzt.

5. Stoßfänger nach einem der Ansprüche 1 bis 4, **dadurch gekennzeichnet, dass** im Mittellängenabschnitt (9) die Breite (bM) gleich oder größer ist als die Höhe (hM) und in dem Endabschnitt (11) die Höhe (hE) größer bemessen ist als die Breite (bE).

6. Stoßfänger nach einem der Ansprüche 1 bis 5, **dadurch gekennzeichnet, dass** das Schließblech (5) zumindest eine Sicke (24) aufweist.

7. Stoßfänger nach Anspruch 6, **dadurch gekennzeichnet, dass** die Sicke (24) sich im Mittellängenabschnitt (9) in Längsrichtung (L) erstreckt.

8. Stoßfänger nach einem der Ansprüche 1 bis 7, **dadurch gekennzeichnet, dass** der Schalenkörper (4) in seiner Rückwand (6) eine Sicke aufweist.

9. Stoßfänger nach einem der Ansprüche 1 bis 8, **dadurch gekennzeichnet, dass** der Schalenkörper (4) in den Endabschnitten (11) des Querträgers (2) einen Anbindungsbereich (25) für eine Crashbox (3) aufweist.

10. Stoßfänger nach einem der Ansprüche 1 bis 9, **dadurch gekennzeichnet, dass** sich an den oberen Frontsteg (12) und/oder an den unteren Frontsteg (13) des Schalenkörpers (4) ein zur Rückwand (6) hin abgewinkelter Außensteg (14, 15) anschließt, wobei sich der Außensteg (14, 15) maximal über 50 % der Länge des Mittellängenabschnitts (9) und/oder der Länge des oberen Frontstegs (12) und/oder des unteren Frontstegs (13) erstreckt.

11. Stoßfänger nach einem der Ansprüche 1 bis 10, **dadurch gekennzeichnet, dass** das Schließblech (4) zumindest einen Mittelzargenabschnitt (32, 33) aufweist, welcher im Mittellängenabschnitt (9) den oberen Schenkel (7) oder den unteren Schenkel (8) umgreift oder an einem Außensteg (14, 15) anliegt.

12. Stoßfänger nach einem der Ansprüche 1 bis 11, **dadurch gekennzeichnet, dass** das Schließblech (5) im Bereich der Endabschnitte (11) Ausnehmungen (29) und/oder Aussparungen (34) aufweist.

13. Stoßfänger nach einem der Ansprüche 1 bis 12, **dadurch gekennzeichnet, dass** das Schließblech Endbereiche aufweist, welche gegenüber einem Ende des Schalenkörpers überstehen.

14. Stoßfänger nach einem der Ansprüche 1 bis 13, **dadurch gekennzeichnet, dass** der Schalenkörper (4) und das Schließblech (5) aus voneinander verschiedenen Stahlwerkstoffen bestehen und/oder eine metallische Beschichtung und/oder eine elektrochemische Beschichtung aufweisen.

15. Stoßfänger nach einem der Ansprüche 1 bis 14, **dadurch gekennzeichnet, dass** das Schließblech (5) und der Schalenkörper (4) schweißtechnisch gefügt sind, wobei die Fügung zwischen den Frontstegen (12, 13) des Schalenkörpers (4) und dem Schließblech (5) im Mittellängenabschnitt (9) und die Fügung zwischen dem Zargenabschnitt (14, 15) des Schließblechs (5) und dem Schalenkörper (4) in einem Endabschnitt (11) durch unterschiedliche Schweißverfahren ausgeführt sind.

16. Stoßfänger nach einem der Ansprüche 1 bis 15, **dadurch gekennzeichnet, dass** der Schalenkörper (4) eine Zugfestigkeit Rm von größer oder gleich (≥) 1.250 MPa und das Schließblech (5) eine Zugfestigkeit Rm von 800 - 1.200 MPa aufweist.

## Claims

1. Bumper (1) for a motor vehicle with a cross member (2), wherein the cross member (2) has a shell body (4) and a closing plate (5) arranged at the front of the shell body (4), wherein the shell body (4) is U-shaped in cross section with a rear wall (6) and an upper leg (7) and a lower leg (8), and the cross member (2) has a central longitudinal section (9) and end sections (11),
wherein the shell body (4) has, in the central longitudinal section (9), an outwardly directed upper front web (12) adjoining the upper leg (7) and an outwardly directed lower front web (13) adjoining the lower leg (8), wherein the closing plate (5) bears against the front webs (12, 13) and is joined thereto, and the closing plate (5) has, in at least one end section (11), a frame section (16, 17) pointing towards the rear wall (6) of the shell body (4), which in the end section (11) bears against an upper leg (7) or a lower leg (8) of the shell body (4) and is joined thereto, wherein
the shell body (4) has a width (bM) and a height (hM) in the central longitudinal section (9) and the shell body (4) has a height (hE) and a width (hE) in an end section (11), wherein the height is measured in the vehicle vertical axis (z-axis) between the outer side of the upper leg (7) and the outer side of the lower leg (8) and the width is measured in the vehicle longitudinal axis (x-axis) from the front side of the shell body (4) to the outer side of the rear wall (6) of the shell body (4), **characterized in that**
the height (hM) in the central longitudinal section (9) is smaller than the height (hE) in the end section (11) and the width (bM) in the central longitudinal section (9) is larger than the width (bE) in the end section (11), and wherein in the central longitudinal section (9) the ratio of width (bM) to height (hM) is greater than the ratio of width (bE) to height (hE) in an end section (11) and between the central longitudinal section (9) and an end section (11) a transition section (10) is provided, which, starting from the central longitudinal section (9), increases in height (hU) and reduces in width (bU).

2. The bumper according to claim 1, **characterized in that** the frame section (16, 17) rests on the outside on the upper leg (7) or on the lower leg (8) and the frame section (16, 17) is joined with the upper leg (7) or the lower leg (8) in an overlapping manner.

3. The bumper according to claim 1 or 2, **characterized in that** a frame section (16, 17) on the outside and a frame section (16, 17) on the inside rest on the upper leg (7) or on the lower leg (8) of the shell body (4).

4. The bumper according to any one of claims 1 or 3, **characterized in that** the closing plate (4) has a U-shaped cross-section or an L-shaped cross-section in the end section (11).

5. The bumper according to any one of claims 1 to 4, **characterized in that**, in the central longitudinal section (9), the width (bM) is equal to or greater than the height (hM) and, in the end section (11), the height (hE) is greater than the width (bE).

6. The bumper according to any one of claims 1 to 5, **characterized in that** the closing plate (5) has at least one bead (24).

7. The bumper according to claim 6, **characterized in that** the bead (24) extends in the longitudinal direction (L) in the central longitudinal section (9).

8. The bumper according to any one of claims 1 to 7, **characterized in that** the shell body (4) has a bead in its rear wall (6).

9. The bumper according to any one of claims 1 to 8, **characterized in that** the shell body (4) has a connection region (25) for a crash box (3) in the end sections (11) of the cross member (2).

10. The bumper according to any one of claims 1 to 9, **characterized in that** an outer web (14, 15), angled towards the rear wall (6), adjoins the upper front web (12) and/or the lower front web (13) of the shell body (4), wherein the outer web (14, 15) extends over a maximum of 50 % of the length of the central longitudinal section (9) and/or the length of the upper front web (12) and/or the lower front web (13).

11. The bumper according to any one of claims 1 to 10, **characterized in that** the closing plate (4) has at least a central frame section (32, 33) which, in the central longitudinal section (9), encloses the upper leg (7) or the lower leg (8) or rests on an outer web (14, 15).

12. The bumper according to any one of claims 1 to 11, **characterized in that** the closing plate (5) has recesses (29) and/or cutouts (34) in the region of the end sections (11).

13. The bumper according to any one of claims 1 to 12, **characterized in that** the closing plate has end regions which project beyond one end of the shell body.

14. The bumper according to any one of claims 1 to 13, **characterized in that** the shell body (4) and the closing plate (5) consist of different steel materials and/or have a metallic coating and/or an electrochemical coating.

15. The bumper according to any one of claims 1 to 14, **characterized in that** the closing plate (5) and the shell body (4) are joined by welding, wherein the joining between the front webs (12, 13) of the shell body (4) and the closing plate (5) in the central longitudinal section (9) and the joining between the frame section (14, 15) of the closing plate (5) and the shell body (4) in an end section (11) is carried out by different welding processes.

16. The bumper according to any one of claims 1 to 15, **characterized in that** the shell body (4) has a tensile strength Rm of greater than or equal to (≥) 1,250 MPa and the closing plate (5) has a tensile strength Rm of 800 - 1,200 MPa.

## Revendications

1. Pare-chocs (1) pour un véhicule à moteur avec une traverse (2), dans lequel la traverse (2) présente un corps de coque (4) et une tôle de fermeture (5) disposée à l'avant du corps de coque (4), dans lequel le corps de coque (4) est configuré en forme de U dans la section transversale avec une paroi arrière (6) ainsi qu'une branche supérieure (7) et une branche inférieure (8) et la traverse (2) présente une section longitudinale médiane (9) et des sections d'extrémité (11),
dans lequel le corps de coque (4) présente dans la section longitudinale médiane (9) une nervure avant supérieure (12) orientée vers l'extérieur se raccordant aux branches supérieures (7) et une nervure avant inférieure (13) orientée vers l'extérieur se raccordant aux branches inférieures (8), dans lequel la tôle de fermeture (5) repose sur les nervures avant (12, 13) et est assemblée à celles-ci et la tôle de fermeture (5) présente dans au moins une section d'extrémité (11) une section de châssis (16, 17) orientée en direction de la paroi arrière (6) du corps de coque (4), laquelle repose dans la section d'extrémité (11) sur une branche supérieure (7) ou sur une branche inférieure (8) du corps de coque (4) et est assemblée à celle-ci, dans lequel
le corps de coque (4) présente une largeur (bM) et une hauteur (hM) dans la section longitudinale médiane (9) et le corps de coque (4) présente une hauteur (hE) et une largeur (hE) dans une section d'extrémité (11), dans lequel la hauteur dans l'axe vertical de véhicule (axe z) est mesurée entre la face extérieure de la branche supérieure (7) et la face extérieure de la branche inférieure (8) et la largeur dans l'axe longitudinal de véhicule (axe x) est mesurée de la face avant du corps de coque (4) jusqu'à la face extérieure de la paroi arrière (6) du corps de coque (4),
**caractérisé en ce que** la hauteur (hM) dans la section longitudinale médiane (9) est mesurée inférieure à la hauteur (hE) dans la section d'extrémité (11) et la largeur (bM) dans la section longitudinale médiane (9) est mesurée supérieure à la largeur (bE) dans la section d'extrémité (11) et dans lequel dans la section longitudinale médiane (9) le rapport entre la largeur (bM) et la hauteur (hM) est supérieur au rapport entre la largeur (bE) et la hauteur (hE) dans une section d'extrémité (11) et entre la section longitudinale médiane (9) et une section d'extrémité (11) est prévue une section de transition (10), laquelle s'agrandit en hauteur (hU) et diminue en largeur (bU) à partir de la section longitudinale médiane (9).

2. Pare-chocs selon la revendication 1, **caractérisé en ce que** la section de châssis (16, 17) repose côté extérieur sur la branche supérieure (7) ou sur la branche inférieure (8) et la section de châssis (16, 17) est assemblée en chevauchement à la branche supérieure (7) ou la branche inférieure (8).

3. Pare-chocs selon la revendication 1 ou revendication 2, **caractérisé en ce qu'**une section de châssis (16, 17) repose côté extérieur et une section de châssis (16, 17) côté intérieur sur la branche supérieure (7) ou sur la branche inférieure (8) du corps de coque (4).

4. Pare-chocs selon l'une quelconque des revendications 1 ou 3, **caractérisé en ce que** la tôle de fermeture (4) présente dans la section d'extrémité (11) une section transversale en forme de U ou une section transversale en forme de L.

5. Pare-chocs selon l'une quelconque des revendications 1 à 4, **caractérisé en ce que** la largeur (bM) est égale ou supérieure à la hauteur (hM) dans la section longitudinale médiane (9) et la hauteur (hE) est supérieure à la largeur (bE) dans la section d'extrémité (11).

6. Pare-chocs selon l'une quelconque des revendications 1 à 5, **caractérisé en ce que** la tôle de fermeture (5) présente au moins une moulure (24).

7. Pare-chocs selon la revendication 6, **caractérisé en ce que** la moulure (24) s'étend dans la section longitudinale médiane (9) dans la direction longitudinale (L).

8. Pare-chocs selon l'une quelconque des revendications 1 à 7, **caractérisé en ce que** le corps de coque (4) présente une moulure dans sa paroi arrière (6).

9. Pare-chocs selon l'une quelconque des revendications 1 à 8, **caractérisé en ce que** le corps de coque (4) présente dans les sections d'extrémité (11) de la traverse (2) une zone de liaison (25) pour un caisson anticollision (3).

10. Pare-chocs selon l'une quelconque des revendications 1 à 9, **caractérisé en ce qu'**une nervure extérieure (14, 15) inclinée vers la paroi arrière (6) se raccorde à la nervure avant supérieure (12) et/ou à la nervure avant inférieure (13) du corps de coque (4), dans lequel la nervure extérieure (14, 15) s'étend au maximum sur 50 % de la longueur de la section longitudinale médiane (9) et/ou de la longueur de la nervure avant supérieure (12) et/ou de la nervure avant inférieure (13).

11. Pare-chocs selon l'une quelconque des revendications 1 à 10, **caractérisé en ce que** la tôle de fermeture (4) présente au moins une section de châssis médiane (32, 33) laquelle, dans la section longitudinale médiane (9), enserre la branche supérieure (7) ou la branche inférieure (8) ou repose sur une nervure extérieure (14, 15).

12. Pare-chocs selon l'une quelconque des revendications 1 à 11, **caractérisé en ce que** la tôle de fermeture (5) présente des creux (29) et/ou évidements (34) dans la zone des sections d'extrémité (11).

13. Pare-chocs selon l'une quelconque des revendications 1 à 12, **caractérisé en ce que** la tôle de fermeture présente des zones d'extrémité, lesquelles font saillie par rapport à une extrémité du corps de coque.

14. Pare-chocs selon l'une quelconque des revendications 1 à 13, **caractérisé en ce que** le corps de coque (4) et la tôle de fermeture (5) sont constitués de matériaux en acier différents les uns des autres
et/ou présentent un revêtement métallique et/ou un revêtement électrochimique.

15. Pare-chocs selon l'une quelconque des revendications 1 à 14, **caractérisé en ce que** la tôle de fermeture (5) et le corps de coque (4) sont assemblés par soudage, dans lequel l'assemblage entre les nervures avant (12, 13) du corps de coque (4) et la tôle de fermeture (5) dans la section longitudinale médiane (9) et l'assemblage entre la section de châssis (14, 15) de la tôle de fermeture (5) et le corps de coque (4) dans une section d'extrémité (11) sont conçus par différents procédés de soudage.

16. Pare-chocs selon l'une quelconque des revendications 1 à 15, **caractérisé en ce que** le corps de coque (4) présente une résistance à la traction Rm supérieure ou égale (≥) à 1 250 MPa et la tôle de fermeture (5) une résistance à la traction Rm de 800 - 1 200 MPa.
